(19) Europäisches Patentamt / European Patent Office / Office européen des brevets

(11) **EP 3 693 101 A1**

(12) **EUROPEAN PATENT APPLICATION**
published in accordance with Art. 153(4) EPC

(43) Date of publication:
**12.08.2020 Bulletin 2020/33**

(51) Int Cl.:
*B22F 1/00* (2006.01)    *B22F 1/02* (2006.01)
*C01B 33/12* (2006.01)    *C01B 33/152* (2006.01)
*H01F 1/20* (2006.01)

(21) Application number: 18864104.7

(22) Date of filing: **02.10.2018**

(86) International application number:
**PCT/JP2018/036879**

(87) International publication number:
**WO 2019/069923 (11.04.2019 Gazette 2019/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.10.2017 JP 2017194545**

(71) Applicants:
• **Mitsubishi Materials Corporation**
**Chiyoda-ku**
**Tokyo 100-8117 (JP)**

• **Diamet Corporation**
**Niigata-shi**
**Niigata 950-8640 (JP)**

(72) Inventors:
• **IKEDA Hiroaki**
**Saitama-shi**
**Saitama 330-8508 (JP)**
• **IGARASHI Kazunori**
**Saitama-shi**
**Saitama 330-8508 (JP)**

(74) Representative: **Gille Hrabal**
**Brucknerstrasse 20**
**40593 Düsseldorf (DE)**

(54) **SILICA-BASED INSULATOR-COATED SOFT MAGNETIC POWDER AND METHOD FOR PRODUCING SAME**

(57) This silica-based insulator-coated soft magnetic powder is a Fe-based soft magnetic powder of which a surface is coated with a silica-based insulating film, the silica-based insulating film includes a Fe oxide and a Si oxide, and the Fe oxide and the Si oxide satisfy that O(-Fe)/O(-Si) (a ratio of an amount of O in the Fe oxide to an amount of O in the Si oxide in the silica-based insulating film) is 0.05 to 1.0 (at% ratio).

FIG. 1

$10 \mu m$

**Description**

TECHNICAL FIELD

The present invention relates to a silica-based insulator-coated soft magnetic powder (a soft magnetic powder coated with a silica-based insulating film) suitable for producing a powder magnetic core (dust core) having a high resistance and a high magnetic flux density and a method for producing the same.

The present application claims priority on Japanese Patent Application No. 2017-194545 filed on October 4, 2017, the content of which is incorporated herein by reference.

BACKGROUND ART

In the related art, a powder magnetic core obtained by the following method is known as a magnetic core for a motor core, an actuator, a magnetic sensor, or the like.

First, a resin powder is added to a soft magnetic powder such as Fe powder or Fe-based alloy powder to produce a mixed powder. The mixed powder is subjected to compression molding, and then is heat treated to obtain a powder magnetic core.

In the case where a powder magnetic core is produced using the soft magnetic powder, since the resistivity (specific resistance) of the soft magnetic powder alone is low, countermeasures are taken to prevent the soft magnetic powder from being sintered together and to increase the resistivity by coating a surface of the soft magnetic powder with an insulating film (insulator film), mixing an organic compound or an insulating material, or the like. For example, in this kind of the powder magnetic core, a powder magnetic core obtained by the following method is known. In order to suppress eddy current loss, a surface of a soft magnetic powder is coated with two layers of a lower insulating film of non-ferrous metal and an upper insulating film including an inorganic compound, and the soft magnetic powder coated with these two layers of insulating films is molded and heat-treated.

As an example relating to the powder magnetic core, there is a technique of forming a powder magnetic core by the following method. A powder compact (pressurized powder body) including an iron-based magnetic metal powder coated with a silicone resin is heated in water vapor at a low temperature of lower than 600°C, and then the powder compact is subjected to a heat treatment in a non-oxidizing atmosphere at a temperature of 600°C or higher (see Patent Document 1). This technology provides a powder magnetic core in which magnetic powder particles are coated with a $SiO_2$ layer and a $Fe_3O_4$ layer.

In addition, in order to achieve low process costs, there is a soft magnetic powder compact formed by the following method. A powder compact including an iron powder coated with a silicone resin or the like is heat-treated in the air to form an oxidation-affected layer which is a layer including an iron oxide and a layered Si oxide at an iron powder interface (see Patent Document 2).

In the related art, powder magnetic cores produced by adding only a silicone resin or a silicone resin and an organic solvent as a binder to a soft magnetic powder have a problem of low heat resistance and resistivity.

In addition, with regard to these powder magnetic cores, a powder compact is heat-treated in the air so as to achieve low process costs or to form a Si oxide by oxidizing a silicone resin with which a powder surface is coated. Therefore, there is a problem that iron loss increases.

PRIOR ART DOCUMENTS

Patent Documents

Patent Document 1: Japanese Unexamined Patent Application, First Publication No. 2011-233827
Patent Document 2: Japanese Unexamined Patent Application, First Publication No. 2013-149659

DISCLOSURE OF INVENTION

Problems to be Solved by the Invention

The present invention was devised in view of the above-described problems, and an object thereof is to provide a silica-based insulator-coated soft magnetic powder suitable for producing a silica-based insulator-coated powder magnetic core which has heat resistance higher than that of a powder magnetic core using a soft magnetic powder coated with a silicone resin and can increase resistivity (specific resistance), and a method for producing the same.

Solutions for Solving the Problems

(1) In order to achieve the objects, a silica-based insulator-coated soft magnetic powder according to an aspect of the present invention is a Fe-based soft magnetic powder of which a surface is coated with a silica-based insulating film, wherein the silica-based insulating film includes a Fe oxide and a Si oxide, and the Fe oxide and the Si oxide satisfy that O(-Fe)/O(-Si) (a ratio of an amount of O in the Fe oxide to an amount of O in the Si oxide in the silica-based insulating film) is 0.05 to 1.0 (at% ratio).

In the case where a powder magnetic core is produced using the silica-based insulator-coated soft magnetic powder, it is required to be heat-treated and heated to a temperature of about 650°C. In the case where the silica-based insulating film includes the Fe oxide and the Si oxide satisfying that O(-Fe)/O(-Si) is 0.05 to 1.0 (at% ratio), the silica-based insulating film is excellent in heat resistance, and in the case where a powder magnetic core including this silica-based insulator-coated soft magnetic powder is produced, insulation of individual soft magnetic powder particles is ensured. Therefore, it is possible to provide a powder magnetic core having high resistivity.

Since the silica-based insulating film includes an appropriate amount of the Fe oxide, adhesion of the silica-based insulating film to the Fe-based soft magnetic powder is enhanced. In addition, when compression molding is performed to form a powder magnetic core, a film deforms to some extent following the deformation of the soft magnetic powder. Therefore, peeling of the film after compression molding is difficult to occur and cracks or defects are less likely to occur in the film. Therefore, a powder magnetic core having high resistivity is obtained.

(2) In the silica-based insulator-coated soft magnetic powder according to the aspect of the present invention, the surface of the Fe-based soft magnetic powder may be coated with the silica-based insulating film via a phosphate film.

(3) In the silica-based insulator-coated soft magnetic powder according to the aspect of the present invention, the silica-based insulating film may include phosphoric acid or hydroxide together with the Fe oxide and the Si oxide.

(4) In the silica-based insulator-coated soft magnetic powder according to the aspect of the present invention, in the silica-based insulating film, a total amount of the Fe oxide and the Si oxide may be 68 to 83 at%.

(5) A method for producing a silica-based insulator-coated soft magnetic powder according to an aspect of the present invention includes: a step of adding a silicone resin and a Si alkoxide to a solvent and stirring and mixing to prepare a silica sol-gel coating liquid; and an applying and drying step of applying the silica sol-gel coating liquid to a Fe-based soft magnetic powder and drying the silica sol-gel coating liquid, wherein a silica-based insulator-coated soft magnetic powder is obtained by the steps, the silica-based insulator-coated soft magnetic powder is a Fe-based soft magnetic powder of which a surface is coated with a silica-based insulating film, the silica-based insulating film includes a Fe oxide and a Si oxide, and the Fe oxide and the Si oxide satisfy that O(-Fe)/O(-Si) (a ratio of an amount of O in the Fe oxide to an amount of O in the Si oxide in the silica-based insulating film) is 0.05 to 1.0 (at% ratio).

(6) In the method for producing a silica-based insulator-coated soft magnetic powder according to the aspect of the present invention, in the applying and drying step, a drying temperature may be set to be in a range of 190°C to 290°C, and air or a low oxygen partial pressure atmosphere may be used as a drying atmosphere.

(7) In the method for producing a silica-based insulator-coated soft magnetic powder according to the aspect of the present invention, the silicone resin may be dissolved in the solvent, and then the Si alkoxide may be added thereto and stirred and mixed, and then an acid catalyst and water may be added thereto and stirred and mixed to obtain the silica sol-gel coating liquid, and the silica sol-gel coating liquid may be applied to the Fe-based soft magnetic powder and dried.

(8) In the method for producing a silica-based insulator-coated soft magnetic powder according to the aspect of the present invention, as the Fe-based soft magnetic powder, a Fe-based soft magnetic powder of which a surface is coated with a phosphate film may be used.

(9) In the method for producing a silica-based insulator-coated soft magnetic powder according to the aspect of the present invention, the silica-based insulating film may include phosphoric acid or hydroxide together with the Fe oxide and the Si oxide.

Effects of Invention

According to an aspect of the present invention, a Fe-based soft magnetic powder is coated with a silica-based insulating film (silica-based insulator film), and the silica-based insulating film includes a Fe oxide and a Si oxide satisfying that O(-Fe)/O(-Si) is 0.05 to 1.0 (at% ratio). Therefore, the presence of the Fe oxide improves adhesion between the Fe-based soft magnetic powder and the silica-based insulating film.

In addition, the silica-based insulating film which coats the soft magnetic powder is an individual oxide of Fe and Si or a complex oxide thereof, and is excellent in insulation even after being subjected to a heat treatment at a high-temperature. Therefore, in a powder magnetic core obtained by subjecting the silica-based insulator-coated soft magnetic powder according to the aspect of the present invention to compression molding and heating the molded body to a high temperature such as 600°C or higher, excellent characteristics that a magnetic flux density is high, resistivity is high, and iron loss is low are obtained.

BRIEF DESCRIPTION OF DRAWINGS

FIG. 1 is an enlarged schematic view showing an outer shape and a partial section of a silica-based insulator-coated soft magnetic powder according to the present embodiment.
FIG. 2 is an enlarged schematic view showing a part of a textural structure (microstructure) of a silica-based insulator-coated powder magnetic core produced using the silica-based insulator-coated soft magnetic powder according to the present embodiment.
FIG. 3 is a perspective view showing an example in which the silica-based insulator-coated powder magnetic core produced using the silica-based insulator-coated soft magnetic powder according to the present embodiment is applied to a reactor core.
FIG. 4 is an explanatory diagram showing an example of steps of producing the silica-based insulator-coated soft magnetic powder according to the present embodiment and steps of producing a powder magnetic core using the same.
FIG. 5 is a view showing an example of a step of mixing a silicone resin and TEOS, (A) shows a state of adding the silicone resin to a solvent, (B) shows a state of adding the TEOS to a solution, (C) shows a state of adding water and a catalyst, and (D) shows a sol-gel coating liquid.
FIG. 6 is a photograph of a secondary electron image obtained by imaging a silica-based insulator-coated soft magnetic powder produced in Example 4 by a field emission type scanning electron microscope at a low acceleration voltage.
FIG. 7 is a photograph of a backscattered electron image obtained by imaging a partial sectional structure of a powder magnetic core produced using the silica-based insulator-coated soft magnetic powder according to Example 4, by a field emission type scanning electron microscope at a low acceleration voltage.
FIG. 8 is a graph showing a relationship between resistivity of a powder magnetic core and a drying temperature in the air with regard to powder magnetic cores produced using silica-based insulator-coated soft magnetic powders obtained by being dried at various temperatures in the air in examples.
FIG. 9 is a graph showing C1s peaks obtained by narrow-scan analysis of surfaces by X-ray photoelectron spectroscopy (XPS), with regard to silica-based insulator-coated soft magnetic powder samples obtained under various drying conditions in examples and comparative examples.
FIG. 10 is a graph showing O1s peaks obtained by the narrow scan analysis.
FIG. 11 is a graph showing Si2p peaks obtained by the narrow scan analysis.
FIG. 12 is a graph showing P2p peaks obtained by the narrow scan analysis.
FIG. 13 is a graph showing Fe2p peaks obtained by the narrow scan analysis.
FIG. 14 is a graph showing an example of a peak separation result for peaks of a silica-based insulator-coated soft magnetic powder sample obtained by being dried in nitrogen (low oxygen partial pressure) at 250°C in the narrow spectrum of Ols shown in FIG. 10.

EMBODIMENTS FOR CARRYING OUT THE INVENTION

Hereinafter, the present invention will be described in detail, but the present invention is not limited to the following embodiments to be described below.

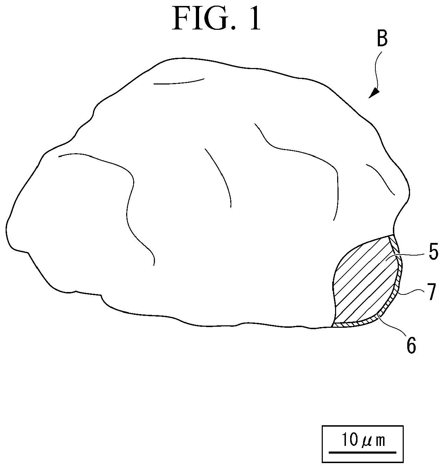

FIG. 1 shows a silica-based insulator-coated soft magnetic powder of a first embodiment according to the present invention, and in a silica-based insulator-coated soft magnetic powder B of this embodiment, a Fe-based soft magnetic powder 5 such as a pure iron powder is coated with a phosphate film 6 and is further coated with a silica-based insulating film 7.
In detail, the silica-based insulator-coated soft magnetic powder B includes a plurality of Fe-based soft magnetic powder particles and silica-based insulating films 7 with which respective surfaces of the Fe-based soft magnetic powder particles are coated. The surface of the Fe-based soft magnetic powder particle is coated with the silica-based insulating film 7 via the phosphate film 6. That is, the surface of the Fe-based soft magnetic powder particle is coated with the phosphate film 6, and a surface of the phosphate film 6 is coated with the silica-based insulating film 7.
In FIG. 1, a symbol B represents one silica-based insulator-coated soft magnetic powder particle, and a symbol 5 represents one Fe-based soft magnetic powder particle. Hereinafter, the Fe-based soft magnetic powder is also simply referred to as a soft magnetic powder.

For example, the soft magnetic powder 5 consists of a pure iron powder, and it is preferable that the soft magnetic powder 5 mainly includes a powder having an average particle size ($D_{50}$) of 5 to 500 $\mu$m. The reasons are as follows. In the case where the average particle size is excessively smaller than 5 $\mu$m, compressibility of the pure iron powder is lowered, and a volume ratio of the pure iron powder is lowered. As a result, a magnetic flux density tends to decrease. On the other hand, in the case where the average particle size is excessively larger than 500 $\mu$m, the eddy current inside the pure iron powder increases and iron loss at a high frequency increases. The average particle size of the pure iron-based soft magnetic powder 5 is a particle size obtained by measurement using a laser diffraction method.

The phosphate film 6 consists of, for example, an iron phosphate film, a zinc phosphate film, a manganese phosphate film, a calcium phosphate film, or the like. The phosphate film 6 is not essential in this embodiment, and may be omitted.

The soft magnetic powder 5 is not limited to the pure iron powder, and it is needless to say that a powder consisting of a general soft magnetic alloy such as a Fe-Si-based iron-based soft magnetic alloy powder, a Fe-Si-Al-based iron-based soft magnetic alloy powder, a Fe-Ni-based alloy powder, a Fe-Co-based iron-based soft magnetic alloy powder, a Fe-Co-V-based iron-based soft magnetic alloy powder, a Fe-P-based iron-based soft magnetic alloy powder, and a Fe-Cr-based Fe-based alloy powder can be widely applied.

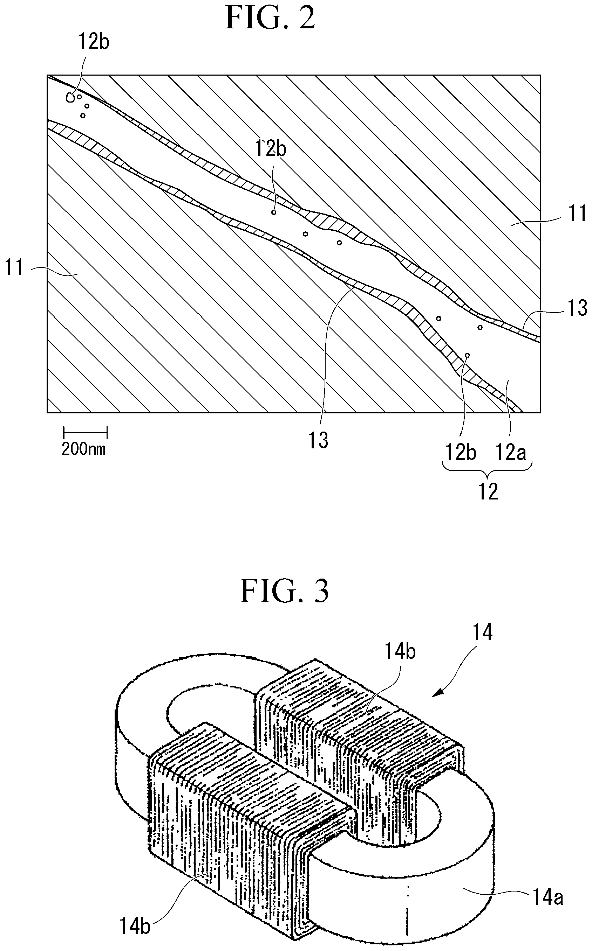

FIG. 2 is a schematic view illustrating an example of a textural structure (microstructure) of a powder magnetic core obtained by subjecting the silica-based insulator-coated soft magnetic powder B of the first embodiment shown in FIG. 1 to compression molding and a heat treatment. This powder magnetic core A of the embodiment is configured by bonding a plurality of soft magnetic powder particles 11 with grain boundary layers 12 interposed therebetween. In addition, a base film 13 consisting of the above-described phosphate film is formed on an outer periphery of each soft magnetic powder particle 11.

FIG. 2 shows only a boundary part of the two soft magnetic powder particles 11 and a part of the grain boundary layer 12 present therebetween. However, the powder magnetic core A may be obtained by bonding and integrating the plurality of respective soft magnetic powder particles 11 via the grain boundary layers 12 and molding the powder into a desired shape.

In more detail, the powder magnetic core A includes the plurality of soft magnetic powder particles 11 and the grain boundary layers 12 interposed between the soft magnetic powder particles 11. The plurality of soft magnetic powder particles 11 are bonded in a state where the grain boundary layers 12 are interposed therebetween. The base film 13 is formed on a surface (outer periphery) of each of the soft magnetic powder particles 11.

As an example of application of the powder magnetic core A to an electromagnetic component, a reactor core 14a shown in FIG. 3 can be exemplified. The reactor core 14a has a racetrack shape in a plan view and has an annular shape. When an insulation wire is coiled around a straight part of the reactor core 14a consisting of the powder magnetic core A to form coil portions 14b and 14b, a reactor 14 is obtained. That is, the reactor 14 includes the reactor core 14a and the coil portions 14b and 14b formed on the straight part of the reactor core 14a.

The reactor core 14a shown in FIG. 3 is obtained by, for example, the following method. A silica-based insulator-coated soft magnetic powder to be described later, a lubricant, and a binder are mixed together and a mixture is put into a die, and then the mixture is subjected to compression molding to have a desired annular shape using the die, and a compact is sintered.

The grain boundary layer 12 of the powder magnetic core A includes a sintered product of the silica-based insulating film 7.

A silicone resin and a Si alkoxide are dissolved or dispersed in a solvent to prepare a silica sol-gel coating liquid. Examples of the Si alkoxide include TEOS (tetraethoxysilane: $Si(OC_2H_5)_4$), TMOS (tetramethoxysilane: $Si(OCH_3)_4$), TEES (triethoxyethylsilane: $Si(OC_2H_5)_3C_2H_5$), MTES (methyltriethoxysilane: $Si(OC_2H_5)_3CH_3$), ETMS (ethyltrimethoxysilane: $Si(OCH_3)_3C_2H_5$), MTMS (methyltrimethoxysilane: $Si(OCH_3)_3CH_3$), tetrapropoxysilane: $Si(OC_3H_7)_4$, and tetrabutoxysilane: $Si(OC_4H_9)_4$. This silica sol-gel coating liquid is applied to a Fe-based soft magnetic powder and dried. Examples of the Fe-based soft magnetic powder include a soft magnetic powder of which a surface is coated with a phosphate film. Thereby, the silica-based insulator-coated soft magnetic powder B is obtained.

Next, a required amount of silica-based insulator-coated soft magnetic powder B together with a lubricant are put into a molding die, and molded into a desired shape. Then, a compact is heat-treated. Thereby, the powder magnetic core A is obtained.

Hereinafter, steps of producing the silica-based insulator-coated soft magnetic powder B, steps of producing the powder magnetic core A, and the silica-based insulating film 7 of the silica-based insulator-coated soft magnetic powder B will be described in detail.

(Method for producing silica-based insulator-coated soft magnetic powder B)

First, a silica sol-gel coating liquid to be applied to the outer periphery (surface) of the soft magnetic powder is prepared.

Hereinafter, the silica sol-gel coating liquid is also simply referred to as a coating liquid.

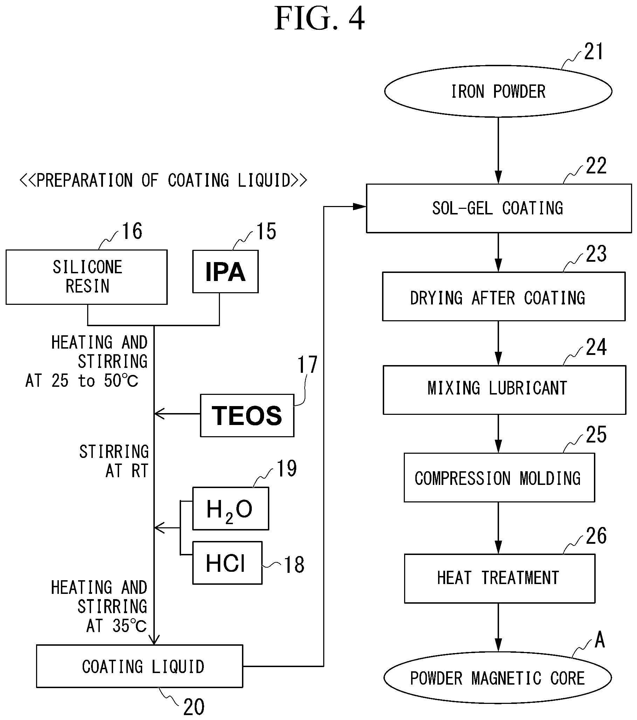

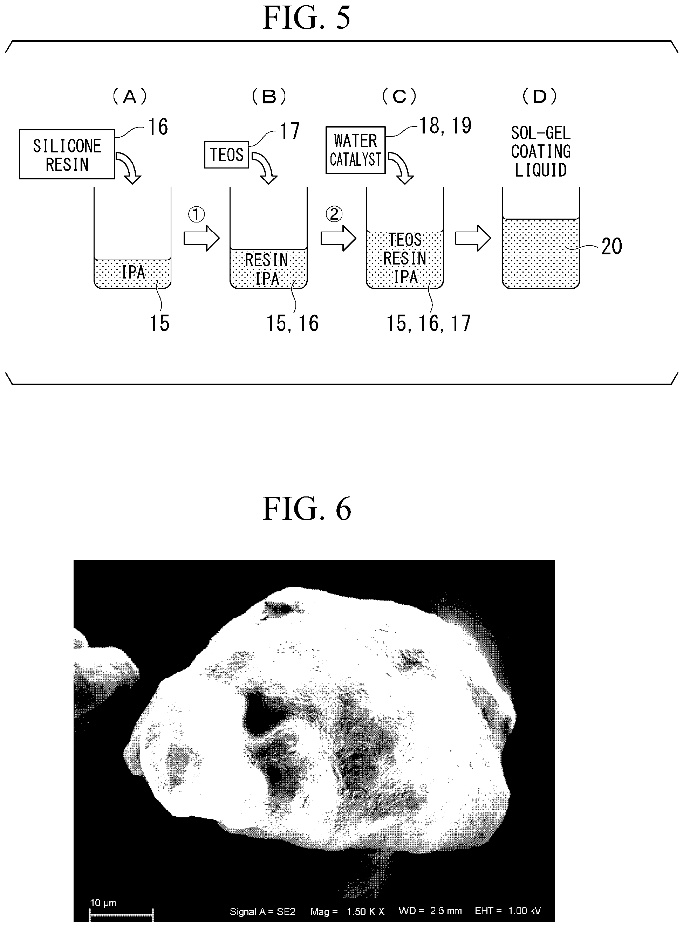

In order to prepare the coating liquid, a silicone resin 16 is added to a solvent 15 such as IPA (2-propanol) or the like as shown in FIGS. 4 and 5(A). A mixed liquid of the silicone resin 16 and the solvent 15 is stirred for about 2 to 24 hours while heating the mixed liquid to a temperature of about 25°C to 50°C to dissolve the silicone resin 16 in the solvent 15 (dissolution step).

The solvent 15 used in this dissolution step may be ethanol, 1-butanol, or the like other than IPA.

In the case where the heating temperature is lower than 25°C, there is a possibility that the silicone resin 16 may not be sufficiently dissolved. In the case where the heating temperature exceeds 50°C, evaporation of the solvent tends to proceed and there is a problem that the silicone resin 16 becomes in a state of not being sufficiently dispersed in the solvent.

The dissolution stirring time is desirably 2 hours or longer, and in the case where the dissolution stirring time is short, the dissolution is likely to be insufficient. However, in the case where the dissolution stirring time is set to be longer than 24 hours, time is wasted. Therefore, the dissolution stirring time is preferably about 2 to 12 hours.

The dissolved amount of the silicone resin 16 dissolved in the solvent 15 is preferably about 20 g to 350 g of silicone resin per 1 L of the solvent.

After sufficiently dissolving the silicone resin 16 in the solvent 15, as shown in FIGS. 4 and 5(B), TEOS (tetra-ethoxysilane: $Si(OC_2H_5)_4$) 17 is added to a solution 15, 16 (solution obtained by dissolving the silicone resin 16 in the solvent 15) and sufficiently stirred and mixed (TEOS addition step). In this embodiment, the case where the TEOS is used as the Si alkoxide is illustrated, but another Si alkoxide may be used instead of the TEOS.

The mixing stirring time (dissolution stirring time) is desirably 4 hours or longer, and in the case where the dissolution stirring time is short, the dissolution is likely to be insufficient. However, in the case where the dissolution stirring time is set to be longer than 24 hours, time is wasted. Therefore, the dissolution stirring time is preferably about 4 to 12 hours.

Regarding the mixed amount of the TEOS 17, a molar ratio of the amount of the solvent 15 to the amount of the TEOS 17 [solvent]/[TEOS] is about 4 to 15, and preferably 7 to 13. The temperature when the TEOS 17 is added to the solution 15, 16 may be room temperature (RT), but the solution may be heated to the same level of the temperature range (25°C to 50°C) as the temperature range when the silicone resin 16 is dissolved.

After adding the TEOS 17, as shown in FIGS.4 and 5(C), a hydrochloric acid 18 as an acid catalyst and water 19 are added to the solution 15, 16, 17 (solution obtained by dissolving the silicone resin 16 and the TEOS 17 in the solvent 15). Next, the mixed solution is stirred for 4 hours or longer at a temperature of 25°C to 50°C (catalyst addition step). For example, the temperature is 35°C, and the stirring time is about 4 to 24 hours.

In the case where HCl having a concentration of 12N is used as the hydrochloric acid 18, a molar ratio of the amount of 12N HCl to the amount of the Si alkoxide (TEOS 17) [12N HCl]/[Si alkoxide] is preferably 0.003 to 0.2, and more preferably 0.01 to 0.1. A molar ratio of the amount of the water 19 to the amount of the Si alkoxide (TEOS 17) [$H_2O$]/[Si alkoxide] is preferably 1.5 to 8.0, and more preferably 1.5 to 4.0. A hydrolysis reaction is allowed to proceed preferentially by adding the hydrochloric acid 18, and a condensation polymerization reaction is allowed to proceed. As the acid catalyst used in this step, nitric acid, acetic acid, formic acid, phosphoric acid, and the like can be used other than the hydrochloric acid. The addition of these acid catalysts is important for allowing the hydrolysis to proceed quickly.

Due to the above-described steps, as shown in FIGS. 4 and 5(D), a sol-gel coating liquid (a coating liquid for forming a silica-based insulating film) 20 can be obtained. The sol-gel coating liquid 20 is in a state where fine particles of silicone resin invisible to the eye are dispersed in a liquid in which the TEOS is added to the solvent.

After the coating liquid 20 is prepared, as shown in a step of FIG. 4, the soft magnetic powder (such as iron powder) 21 with a base film and the coating liquid 20 are put into a fluid mixer such as a Henschel mixer or the like. A predetermined amount of the coating liquid 20 is applied to the outer periphery (surface) of the soft magnetic powder (applying step 22). The soft magnetic powder 21 with a base film is a Fe-based soft magnetic powder of which a surface is coated with the phosphate film 6.

As the soft magnetic powder 21 used in the applying step 22, the soft magnetic powder 21 without the phosphate film 6 may also be used, and the phosphate film 6 may be omitted.

A heating temperature during mixing is set to be 90°C to 105°C, and mixing is performed under reduced pressure. For example, the heating temperature is 95°C. After the mixing is finished, the coating liquid on the outer periphery (surface) of the soft magnetic powder is dried by heating at a temperature of about 190°C to 290°C for several tens of minutes (20 to 30 minutes). The drying temperature is more preferably about 220°C to 280°C, and most preferably 250°C. The drying atmosphere is preferably the air (the atmosphere) or a low oxygen partial pressure atmosphere (an atmosphere having a low partial pressure of oxygen). The low oxygen partial pressure atmosphere is an inert gas atmosphere containing oxygen with an oxygen partial pressure of 0.001 MPa or higher and lower than 0.021 MPa (0.0099 atm or more and less than 0.21 atm), and examples of the inert gas include nitrogen gas, and the like. As described above, it is possible to obtain the silica-based insulator-coated soft magnetic powder B having a structure in which the outer periphery (surface) of the soft magnetic powder is coated with a film obtained by drying the coating liquid (drying step 23).

In the case where drying is performed at a temperature of lower than 190°C, the amount of the Fe oxide ($Fe_2O_3$ or FeO) produced in the silica-based insulating film is reduced. Therefore, a resistivity of a powder magnetic core obtained in a later step is reduced. In the case where drying is performed at a temperature exceeding 290°C, cracks or defects are likely to occur in the film when the powder magnetic core is produced in a later step, and a problem that the resistivity decreases occurs.

In the present specification, in the case where an upper limit value and a lower limit value of a numerical range are expressed by being coupled using "to", the numerical range includes the upper limit and the lower limit unless otherwise specified. Therefore, the above-described "220°C to 280°C" means a range of 220°C or higher and 280°C or lower.

(Silica-based insulating film 7 of silica-based insulator-coated soft magnetic powder B)

Regarding the silica-based insulating film 7 after drying, as an example, a film thickness of a $SiO_2$ film derived from TEOS is about 3 nm to 20 nm, more preferably 4 to 17 nm, and for example, 5 nm. The film thickness of the $SiO_2$ film derived from TEOS (Si alkoxide) means a thickness of a $SiO_2$ film formed in the case where it is assumed that all the TEOS (Si alkoxide) in the coating liquid forms a $SiO_2$ film with which the surface of the soft magnetic powder is coated.

In addition, the silica-based insulating film 7 mainly includes a Fe oxide ($Fe_2O_3$ or FeO) and a Si oxide. In the silica-based insulating film 7, when the amount of O in the Fe oxide is represented by O(-Fe) (at%) and the amount of O in the Si oxide is represented by O(-Si) (at%), the Fe oxide and the Si oxide satisfy that O(-Fe)/O(-Si) (a ratio of an amount of O in the Fe oxide to an amount of O in the Si oxide in the silica-based insulating film) is 0.05 to 1.0 (at% ratio (ratio of atomic%)). As an example, the silica-based insulating film 7 includes the Fe oxide and the Si oxide at a total amount of 68 to 83 at%, and the remainder which is about 17 to 32 at% includes an impurity component having a P oxide or a hydroxyl group, a hydrocarbon component, or the like. The total amount of the Fe oxide and the Si oxide is more preferably in a range of 69 to 81 at%.

The total amount of the Fe oxide and the Si oxide and the ratio of the amount of O in the Fe oxide to the amount of O in the Si oxide in the silica-based insulating film can be determined as an average value obtained by measuring a region from the surface of the film to a depth of 5 nm or less from the surface of the film, for example, from the surface to a depth of about 2 to 3 nm in a range of about $\varphi200$ $\mu$m in diameter, in the results of surface analysis by X-ray photoelectron spectroscopy (XPS). That is, in the range of about $\varphi200$ $\mu$m in diameter, a region from the surface to a depth of 5 nm or less of the one or a plurality of the silica-based insulator-coated soft magnetic powder particles is subjected to surface analysis by the X-ray photoelectron spectroscopy (XPS); and thereby, the amount of Fe (at%), the amount of Si (at%), the amount of O in the Fe oxide (at%), and the amount of O in the Si oxide (at%) are measured. An average value of the measured values of the amount of Fe is the amount of Fe in the silica-based insulating film. An average value of the measured values of the amount of Si is the amount of Si in the silica-based insulating film. An average value of the measured values of the amount of O in the Fe oxide is the amount of O in the Fe oxide in the silica-based insulating film. An average value of the measured values of the amount of O in the Si oxide is the amount of O in the Si oxide in the silica-based insulating film.

The range of O(-Fe)/O(-Si) = 0.05 to 1.0 (at% ratio) is the measurement result described above. Therefore, the range can be expressed as a ratio of the amount of O in the Fe oxide to the amount of O in the Si oxide in the surface of the silica-based insulating film 7.

More specifically, as shown in the test results of examples to be described later, in narrow scan analysis by XPS analysis, a C1s peak, an O1s peak, a Si2p peak, a P2p peak, and Fe2p peak are obtained. An area ratio (area%) (= at%) of each peak is calculated such that the total of the area ratios of the C1s, O1s, Si2p, P2p, and Fe2p peaks is 100%. The area ratio of the Si2p peak is the amount of Si in the silica-based insulating film. The area ratio of the P2p peak is the amount of P in the silica-based insulating film. The area ratio of the Fe2p peak is the amount of Fe in the silica-based insulating film.

In addition, an O1s spectrum obtained by narrow scan analysis is analyzed, and a peak of the Fe oxide (a peak of O bonding with Fe), a peak of the Si oxide (a peak of O bonding with Si), and a peak of the phosphoric acid or the hydroxide are separated. Accordingly, O(-Fe) and O(-Si) can be determined. Depending on a sample, a peak of adsorbed water may be observed in addition to these peaks. An area ratio of each peak is calculated such that the total of the area ratios of peaks other than the peak of adsorbed water in the peaks separated from the O1s peak is 100%. The O(-Fe) (at%) can be determined by multiplying an area ratio of the peak of the Fe oxide by the area ratio of the O1s peak. The O(-Si) (at%) can be determined by multiplying an area ratio of the peak of the Si oxide by the area ratio of the O1s peak. Therefore, it is possible to calculate an at% ratio (ratio of atomic%) between the O(-Fe) and the O(-Si). In addition, the total of the area ratio of Si2p peak (Si amount), the area ratio of the Fe2p peak (Fe amount), the O(-Fe), and the O(-Si) is the total amount of the Fe oxide and the Si oxide.

The silica-based insulating film 7 also includes a silicone resin. Constituent elements of the silicone resin are C, H, Si, and O, but a peak derived from H is not measured. Therefore, the amount of the silicone resin in the silica-based insulating film 7 is unknown.

From these peak separation results, it is desirable that the silica-based insulating film 7 has the ratio of O(-Fe)/O(-Si) in the range of 0.05 to 1.0 (at% ratio). The reason for this is as follows. In the case where the powder magnetic core A to be described later is produced using the silica-based insulator-coated soft magnetic powder B, the powder magnetic core A that exhibits high saturation magnetic flux density, high resistivity, and low iron loss can be obtained.

In the above-described results, in the silica-based insulating film 7, the ratio of the amount of oxygen binding with Fe to the amount of oxygen binding with Si per observation area is determined.

In the case where the ratio is in the range described above, in the silica-based insulating film 7, Fe is present as $Fe_2O_3$ or FeO, and a large amount of $Fe_2O_3$ or FeO is present. Therefore, it can be presumed that the silica-based insulating film 7 strongly adheres to the soft magnetic powder 5 or strongly adheres to the soft magnetic powder 5 via the phosphate film 6 of the base.

However, in the case where the O(-Fe)/O(-Si) exceeds 1.0 (at% ratio), the amount of an iron oxide in the silica-based insulating film 7 is excessively large, and the adhesion of the film seems to be good. However, the silica-based insulating film 7 tends to be excessively hard. Therefore, during compression molding in the production of the powder magnetic core A to be described later, it can be presumed that the silica-based insulating film 7 is difficult to follow the deformation of the soft magnetic powder 5, and a plurality of cracks and defects may occur in the silica-based insulating film 7. Therefore, it can be presumed that Fe of the base is exposed through the crack or the like, conduction is likely to occur between the soft magnetic powder particles in the powder magnetic core A, and the resistivity of the powder magnetic core A decreases.

In the case where the O(-Fe)/O(-Si) is less than 0.05 (at% ratio), the amount of iron oxide in silica-based insulating film 7 is small. Therefore, the adhesiveness of the silica-based insulating film 7 to the soft magnetic powder 5 decreases. Accordingly, at the time of compression molding in the production of the powder magnetic core A, peeling of the silica-based insulating film 7 on the surface of the soft magnetic powder 5 occurs and the Fe of the base is easily exposed. Therefore, a probability that conduction occurs between the soft magnetic powder particles increases, and it can be presumed that the powder magnetic core A does not have high resistance.

Accordingly, it is necessary that the silica-based insulating film 7 has the ratio of O(-Fe)/O(-Si) in the range of 0.05 to 1.0 (at% ratio). The ratio of O(-Fe)/O(-Si) is more preferably 0.1 to 1.0 (at% ratio).

(Method for producing powder magnetic core A)

A silicone resin powder at a ratio of 0% by mass to 0.9% by mass is mixed with the silica-based insulator-coated soft magnetic powder B of this embodiment to obtain a raw material mixed powder for molding. The ratio of the silicone resin powder is the amount relative to 100% by mass of the silica-based insulator-coated soft magnetic powder B, and for example, the ratio is 0.03% by mass, 0.09% by mass, or 0.18% by mass. A wax-based lubricant at a ratio of 0% by mass to 0.8% by mass is mixed with the raw material mixed powder for molding (mixing step 24). The ratio of the wax-based lubricant is the amount relative to 100% by mass of the raw material mixed powder for molding, and for example, the ratio is 0.6% by mass.

The obtained raw material mixed powder for molding (raw material mixed powder for molding containing the wax-based lubricant) is put into a die of a press molding machine and subjected to compression molding into a desired shape such as an annular shape, a rod shape, a disk shape, or the like (molding step 25).

For example, the compression molding can be performed by warm molding at about 80°C at a pressure of about 700 to 1570 MPa. The pressing force during the molding is, for example, 790 MPa.

The obtained compact is subjected to a heat treatment step 26. In the heat treatment step 26, in a non-oxidizing atmosphere such as a vacuum atmosphere, a nitrogen gas atmosphere, or the like, the compact is heated for several tens of minutes to several hours (about 20 minutes to 3 hours) in a temperature range of 500°C to 900°C to be sintered. The heating temperature is, for example, 650°C. The heating time is, for example, about 30 minutes. Thereby, it is possible to obtain the powder magnetic core A having a desired structure. The powder magnetic core A has a structure in which the plurality of soft magnetic powder particles 11 consisting of the soft magnetic powder are bonded in a state where the grain boundary layers 12 are interposed therebetween.

In the production method described above, the silicone resin and the TEOS are sufficiently dissolved and dispersed in the solvent described above to prepare the coating liquid. The coating liquid is applied to the soft magnetic powder and dried in a suitable temperature range (220°C to 280°C). Thereby, the silica-based insulator-coated soft magnetic powder B of this embodiment is produced. The dried object of the coating liquid is the silica-based insulating film 7. The silica-based insulator-coated soft magnetic powder B of this embodiment is subjected to compression molding and heated to produce the powder magnetic core A of this embodiment. The silica-based insulating film 7, which is the dried object of the coating liquid, becomes a compressed layer by the compression molding. The compressed layer is sintered to form the grain boundary layers 12. In the powder magnetic core A, a structure in which the plurality of soft magnetic powder particles 11 are bonded by the grain boundary layers 12 is obtained.

The silicone resin and the TEOS are sufficiently dissolved and dispersed in the solvent to prepare the sol-gel coating liquid. The dried object of the sol-gel coating liquid (silica-based insulating film 7) is sintered to form the grain boundary layers 12. Therefore, it can be assumed that the grain boundary layer 12 is a composite oxide layer in which Si-O skeletons derived from the sol-gel coating liquid and resin skeletons derived from the silicone resin are combined in the layer. The silicone resin is a silicone resin contained in the silica-based insulating film 7 and a silicone resin mixed with the silica-based insulator-coated soft magnetic powder B. In addition, the grain boundary layer 12 includes a Fe oxide diffused from the Fe-based soft magnetic powder 5.

In the sol-gel coating liquid (coating liquid for forming a silica-based insulating film) 20, the silicone resin is sufficiently dissolved in a solvent, the TEOS is sufficiently dispersed therein, and an acid catalyst and water are added thereto to promote a hydrolysis reaction and a condensation polymerization reaction. Thus, in the case where the sol-gel coating liquid (coating liquid for forming a silica-based insulating film) 20 includes the silicone resin and the TEOS, a silicone resin which is resin is inevitably present in a molecule of the silica-based insulating film 7. In addition, in the step of producing the powder magnetic core A, the silicone resin powder is mixed with the silica-based insulator-coated soft magnetic powder B. These silicone resins are partially burned during sintering. Thereby, atomic-level vacancies are formed in the grain boundary layer. Fe is diffused from the Fe-based soft magnetic powder 5 during sintering, and iron atoms are trapped in the atomic-level vacancies. As a result, the grain boundary layer 12 having a structure in which Fe is diffused in a Si composite oxide is formed, and the soft magnetic powder particles 11 are firmly bonded to each other via the grain boundary layers 12. Thereby, it is possible to obtain the powder magnetic core A with high strength.

Furthermore, the silica-based insulator-coated soft magnetic powder B is coated with the silica-based insulating film 7 including the Fe oxide and the Si oxide, and the Fe oxide and the Si oxide satisfy that O(-Fe)/O(-Si) is 0.05 to 1.0 (at% ratio). The powder magnetic core A is obtained by subjecting the silica-based insulator-coated soft magnetic powder B to compression molding and sintering. Therefore, the soft magnetic powder particles 11 obtained after the sintering are bonded via the grain boundary layers 12. The grain boundary layer 12 includes a compressed and sintered product of the silica-based insulating film 7 and a compressed and sintered product of the silicone resin described above, and adhesiveness of the grain boundary layer 12 to the soft magnetic powder particle 11 is excellent, and the grain boundary layer has few defects such as cracks and the like. Therefore, the powder magnetic core A has characteristics of high resistivity, high magnetic flux density, and low iron loss.

As an example, as shown in FIG. 2, the grain boundary layer 12 includes a base layer 12a in which C is contained in an individual oxide of Fe and Si or in the composite oxide of Fe and Si and a spot-like or irregular $SiO_2$-rich region 12b dispersed in the grain boundary layer 12.

In the silica-based insulator-coated soft magnetic powder B of this embodiment, the surface of each soft magnetic powder particle is coated with the silica-based insulating film 7 as described above. For example, when observing the silica-based insulator-coated soft magnetic powder B while heating (raising a temperature) using an environmental scanning electron microscope (ESEM), it was found that iron oxide microcrystals were hardly formed on a peripheral surface of the silica-based insulator-coated soft magnetic powder B even in the case where the temperature was raised to a high temperature of 500°C to 650°C in a reduced-pressure inert gas atmosphere. For this reason, even in the case where the powder magnetic core A is sintered at a high temperature, it is possible to provide the powder magnetic core A in which the decreasing of the resistivity can be prevented.

That is, when observing the silica-based insulator-coated soft magnetic powder B while heating (raising a temperature) using the ESEM, it was found that there was little precipitation of iron oxide microcrystals on the peripheral surface of the silica-based insulator-coated soft magnetic powder B. Therefore, it is presumed that high resistivity can be maintained even after the silica-based insulator-coated soft magnetic powder is sintered at a high temperature. The little precipitation of the iron oxide microcrystals during the raising of the temperature in a reduced-pressure inert gas atmosphere means that the number of defects present in the film before the sintering is small.

In addition, in the reactor 14 shown in FIG. 3 to which the powder magnetic core A is applied, since the reactor core 14a has large resistivity, high magnetic flux density, and low iron loss, it is possible to obtain a high performance as the reactor 14.

The reactor 14 is an example in which the powder magnetic core A according to the present embodiment is applied to an electromagnetic circuit component, and it is needless to say that the powder magnetic core A according to the present embodiment can be applied to other various electromagnetic circuit components. For example, the powder magnetic core A can be applied to various electromagnetic circuit components such as a motor core, an actuator core, a transformer core, a choke core, a magnetic sensor core, a noise filter core, a switching power supply core, and a DC/DC converter core.

EXAMPLES

A pure iron powder, or an iron phosphate-coated iron powder in which the pure iron powder was coated with an iron phosphate film, which had an average particle size (D50) of 50 $\mu$m, was prepared. Hereinafter, the pure iron powder and the iron phosphate-coated iron powder are also simply referred to as an iron powder.

A coating liquid was prepared, and the coating liquid included TEOS in an amount by which a thickness of a $SiO_2$ film derived from the TEOS on the surface of the iron phosphate-coated iron powder (soft magnetic powder) became 4 nm, and a silicone resin in an amount of 0.24% by mass relative to the amount of the soft magnetic powder. Using this coating liquid, a sample of Example 1 (silica-based insulator-coated soft magnetic powder) and a raw material mixed powder for molding were prepared according to steps to be described later.

A coating liquid was prepared, and the coating liquid included TEOS in an amount by which a thickness of a $SiO_2$ film derived from the TEOS on the surface of the iron phosphate-coated iron powder (soft magnetic powder) became 5 nm, and a silicone resin in an amount of 0.30% by mass relative to the amount of the soft magnetic powder. Using this coating liquid, samples of Examples 2, 5, and 6 and Comparative Examples 1 and 3 and raw material mixed powders for molding were prepared according to steps to be described later.

A coating liquid was prepared, and the coating liquid included TEOS in an amount by which a thickness of a $SiO_2$ film derived from the TEOS on the surface of the pure iron powder (soft magnetic powder) became 5 nm, and a silicone resin in an amount of 0.30% by mass relative to the amount of the soft magnetic powder. Using this coating liquid, a sample of Example 3 and a raw material mixed powder for molding were prepared according to steps to be described later.

A coating liquid was prepared, and the coating liquid included TEOS in an amount by which a thickness of a $SiO_2$ film derived from the TEOS on the surface of the iron phosphate-coated iron powder (soft magnetic powder) became 16.9 nm, and a silicone resin in an amount of 0.20% by mass relative to the amount of the soft magnetic powder. Using this coating liquid, a sample of Example 4 and a raw material mixed powder for molding were prepared according to steps to be described later.

A coating liquid was prepared, and the coating liquid included TEOS in an amount by which a thickness of a $SiO_2$ film derived from the TEOS on the surface of the iron phosphate-coated iron powder (soft magnetic powder) became 11.3 nm, and a silicone resin in an amount of 0.14% by mass relative to the amount of the soft magnetic powder. Using this coating liquid, a sample of Comparative Example 2 and a raw material mixed powder for molding were prepared according to steps to be described later.

In each of these examples and comparative examples, for the silicone resin, a graded product having a particle size of 1 mm or smaller was used.

Example 4 will be described below as a representative example of a preparation procedure for the above-described sample and the raw material mixed powder for molding.

A methyl-based silicone resin was mixed with 2-propanol (IPA) at a liquid temperature of 45°C to 50°C and stirred for 2 hours to dissolve the methyl-based silicone resin in the IPA. Tetraethoxysilane (TEOS) was added to the obtained solution, and the solution was stirred and mixed at room temperature for 4 hours. The mixing and stirring time means the time for stirring at a stirring speed of 150 rpm using a magnetic stirrer. Hereinafter, also in other examples, in the case of stirring, the stirring conditions were the same as those described above.

Thereafter, 9.2 mass% dilute hydrochloric acid was added to the solution, and the solution was stirred for 4 to 24 hours (liquid temperature: about 35°C) to obtain a silica sol-gel coating liquid.

The silica sol-gel coating liquid for preparing the sample of Example 4 was obtained by mixing each component at a ratio of silicone resin: 0.61 g, IPA: 6.70 g, TEOS: 1.86 g, water: 0.32 g, 12N HCl: 0.008 g, and a total of 9.496 g.

In addition, also in Examples 1 to 3, 5, and 6, and Comparative Examples 1 to 3, each component was mixed according to the same mixing procedure (mixing order) as in Example 4. Each of the amount of silicone resin, the amount of IPA, the amount of TEOS, the amount of water, and the amount of 12N HCl described above was adjusted. Thereby, additive components were adjusted such that the thickness of the $SiO_2$ film derived from the TEOS and the amount of silicone resin described above were obtained. As a result, the silica sol-gel coating liquid was prepared.

In the silica sol-gel coating liquid for preparing the sample of Example 4, a ratio (molar ratio) of [IPA]/[TEOS] was set to 12.

The addition amount of the TEOS was calculated as the thickness of the $SiO_2$ film derived from the TEOS, and converted based on the soft magnetic powder having a specific surface area of $4.0 \times 10^{-2}$ m$^2$/g.

The film thickness of the $SiO_2$ film derived from the TEOS was calculated from the following equation using the specific surface area (measured value obtained by a BET three-point method) of soft magnetic powder and the density of $SiO_2$ (physical property value of crystal: 2.65 g/cm$^3$).

$$\text{Film thickness (nm) of SiO}_2 \text{ film derived from TEOS = Amount (mol) of TEOS} \times$$

$$\text{Molecular weight (g/mol) of SiO}_2 \text{ / Density (g/cm}^3) \text{ of SiO}_2 \text{ / Specific surface area (m}^2\text{/g)}$$

$$\text{of soft magnetic powder / Weight (g) of soft magnetic powder (*)}$$

(Calculation Example)

In the case where the weight of TEOS is 7.45 g, the specific surface area of an iron powder is $4.0 \times 10^{-2}$ m$^2$/g, and the weight of the iron powder is 300 g, when the molecular weight of TEOS of 208.33 g/mol and the molecular weight of SiO$_2$ of 60.1 g/mol are substituted into the above-described equation (*), the film thickness of the SiO$_2$ film derived from the TEOS is a value below.

$$\text{Film thickness of SiO}_2 \text{ film derived from TEOS = 7.45 (g)/208.33 (g/mol)} \times 60.1$$

$$\text{(g/mol)/2.65 (g/cm}^3\text{)/4.0} \times 10^{-2} \text{ (m}^2\text{/g)/300 (g) = 6.76} \times 10^{-8}\text{(m) = 67.6(nm)}$$

Strictly, in order to unify the unit of length to "m", $2.65 \times 10^6$ (g/m$^3$) is used as the density of SiO$_2$.
The molar ratio of the amount of water to the amount of the TEOS was set to [H$_2$O]/[TEOS] = 2. Therefore, the addition amount of water is calculated by the following equation.

$$\text{(Mass of H}_2\text{O) = (Mass of TEOS/(208.33 g/mol (Molecular weight of}$$

$$\text{TEOS)))} \times 2 \times 18.016 \text{ g/mol (Molecular weight of H}_2\text{O)}$$

The molar ratio of the amount of concentrated hydrochloric acid (12N HCl) to the amount of the TEOS was set to [12N HCl]/[TEOS] = 0.025. Therefore, the addition amount of concentrated hydrochloric acid is calculated by the following equation.

$$\text{(Mass of 12N HCl) = (Mass of TEOS/(208.33 g/mol (Molecular weight of}$$

$$\text{TEOS)))} \times 0.025 \times 36.458 \text{ g/mol (Molecular weight of HCl)}$$

Alternatively, since [12N HCl]/[TEOS] is 0.025, the molar ratio of the amount of 100% hydrochloric acid to the amount of the TEOS is [100% HCl]/[TEOS] = 0.009. Therefore, the addition amount of concentrated hydrochloric acid is also calculated by the following equation.

$$\text{(Mass of 12N HCl) = (Mass of TEOS/(208.33 g/mol (Molecular weight of}$$

$$\text{TEOS)))} \times 0.009 \times 36.458 \text{ g/mol (Molecular weight of HCl)} \times 100/36.$$

In the second equation representing the mass of 12N HCl, a calculation is performed by setting the HCl concentration of the hydrochloric acid reagent 12N HCl to 36%.
The above-described silica sol-gel coating liquid was applied to the iron phosphate-coated iron powder using a Henschel mixer.
The coating liquid obtained by the above-described step was supplied to the iron phosphate-coated iron powder (300 g) stirred in a container of Henschel mixer which was heated to 95°C, and the mixture was stirred and mixed while heating under reduced pressure. The temperature of the iron phosphate-coated iron powder once decreased due to the supply of the coating liquid. Stirring and heating were further continued under reduced pressure for 3 minutes after the temperature of the iron phosphate-coated iron powder recovered to the coating start temperature, for example, 94°C. Specifically, the coating liquid was supplied while stirring, then the supply of the coating liquid was stopped, and stirring and mixing were performed while heating under reduced pressure. This series of operations was repeated several times. By using the iron powder and the coating liquid in the above-described ratios, a coated iron powder (for preparing the sample of Example 4) in which a thickness of the $SiO_2$ film derived from the TEOS was 16.9 nm was obtained.

In the step of applying the sol-gel coating liquid to the iron powder with a Henschel mixer, in the case where the applying of the sol-gel coating liquid (coating liquid for forming a silica-based insulating film) so as to cover the surface of the iron powder was continued in a state of being heated for 3 minutes at 95°C in the air, the sol-gel coating liquid film was applied and fixed on the iron powder without being dissolved at every time the coating liquid was repeatedly supplied. In the case where the heating time at 95°C is shorter than 3 minutes, the sol-gel coating liquid film is not fixed on the surface of the iron powder and is easily peeled off. Therefore, it is preferable to perform the treatment for 3 minutes or longer.

Next, a supply amount of 9.496 g of the coating liquid obtained in the above-described step with respect to the iron phosphate-coated iron powder (300 g) stirred in a container of a Henschel mixer which was heated to 95°C was adjusted to obtain the coated iron powder of Example 4 including the $SiO_2$ film derived from the TEOS with the thickness described above.

In other examples, each coated iron powder was prepared by changing the amount of the coating liquid and a mixing amount of each component in the coating liquid.

In Examples 1 and 3 to 6 and Comparative Examples 1 and 2, thereafter, the iron phosphate-coated iron powder to which the sol-gel coating liquid was applied was heated and dried at 200°C, 250°C, or 300°C for 1 hour in the air. Thereby, samples of a plurality of silica-based insulator-coated soft magnetic powders (silica sol-gel-coated iron powder) of which heating drying temperatures were different from each other were obtained.

Specifically, in Example 5 and Comparative Example 2, the silica-based insulator-coated soft magnetic powder (sample) was obtained by performing drying at 200°C. In Examples 1, 3, 4, and 6, the silica-based insulator-coated soft magnetic powder (sample) was obtained by performing drying at 250°C. In Comparative Example 1, the silica-based insulator-coated soft magnetic powder (sample) was obtained by performing drying at 300°C.

In addition, in Example 2 and Comparative Example 3, the iron phosphate-coated iron powder to which the sol-gel coating liquid was applied was dried under the following atmosphere. In Example 2, the silica-based insulator-coated soft magnetic powder (sample) was obtained by performing drying at 250°C in a nitrogen gas flow atmosphere (low oxygen partial pressure atmosphere). In Comparative Example 3, a drying furnace was evacuated and then purged (replaced) with nitrogen gas, and the silica-based insulator-coated soft magnetic powder (sample) was obtained by performing heating and drying at 250°C in 100% nitrogen atmosphere.

The sample powders of Examples 1 to 6 and the sample powders of Comparative Examples 1 to 3 were subjected to surface analysis by XPS analysis.

As an XPS analyzer, ULVAC PHI 5000 VersaProbe 11 was used. As an X-ray source, Monochromated Al K$\alpha$: 25W was used. The surface analysis was performed under conditions of pass energy: 187.85 eV (Survey) and 46.95 eV (Narrow), measurement interval: 0.8 eV/Step (Survey) and 0.1 eV/Step (Narrow), photoelectron take-off angle with respect to sample surface: 45 deg, and analysis area: range of about $\varphi$200 $\mu$m in diameter.

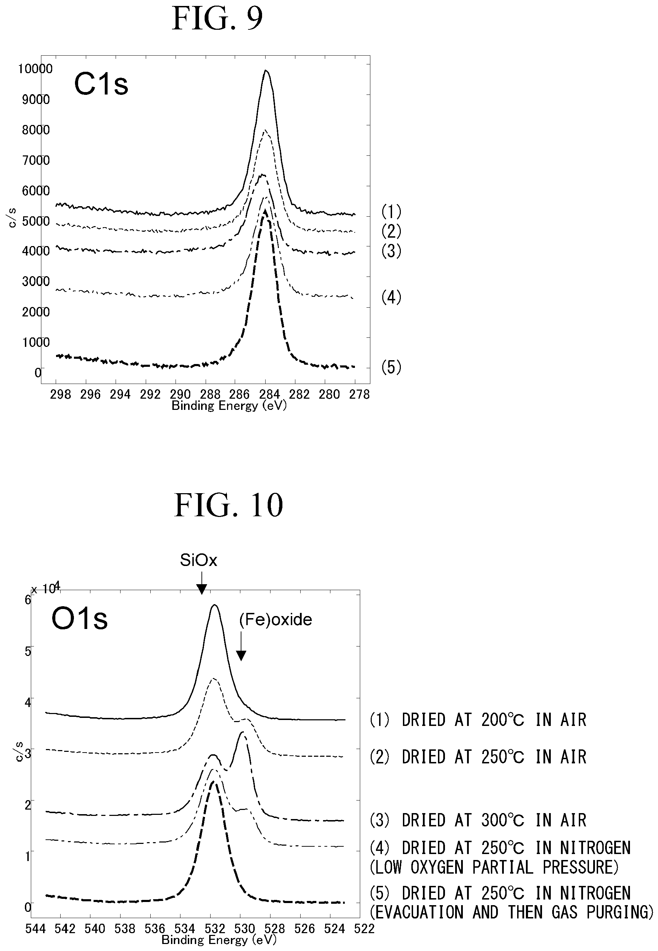

As a result, a peak of each element was obtained as shown in FIGS. 9 to 13.

A sample dried at 200°C in the air (sample (1): Example 5), a sample dried at 250°C in the air (sample (2): Example 6), a sample dried at 300°C in the air (sample (3): Comparative Example 1), a sample dried at 250°C in nitrogen (dried at low oxygen partial pressure) (sample (4): Example 2), and a sample dried at 250° in nitrogen (dried by being evacuated and then purged with a nitrogen gas) (sample (5): Comparative Example 3) were prepared.

FIG. 9 shows C1s peaks obtained by narrow scan analysis for the samples (1) to (5) by an XPS analysis method.

FIG. 10 shows O1s peaks obtained by narrow scan analysis for the samples (1) to (5) by an XPS analysis method.

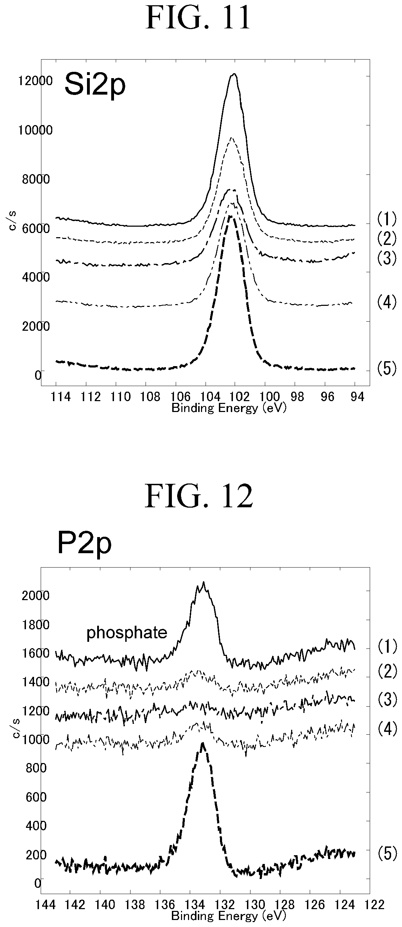

FIG. 11 shows Si2p peaks obtained by narrow scan analysis for the samples (1) to (5) by an XPS analysis method.

FIG. 12 shows P2p peaks obtained by narrow scan analysis for the samples (1) to (5) by an XPS analysis method.

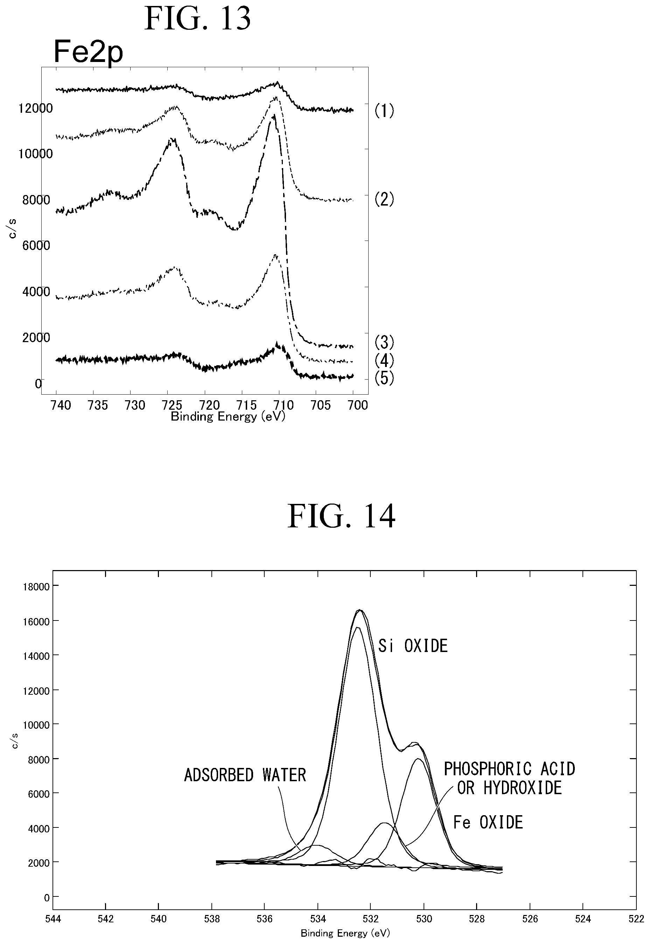

FIG. 13 shows Fe2p peaks obtained by narrow scan analysis for the samples (1) to (5) by an XPS analysis method.

Among peak patterns shown in FIGS. 9 to 13, in the sample (2) shown in FIG. 10 (sample dried at 250°C in the air: Example 6), the sample (3) (sample dried at 300°C in the air: Comparative Example 1), and the sample (4) (sample dried at 250°C in nitrogen (dried at low oxygen partial pressure): Example 2), two peak-shaped peaks having a peak of $SiO_x$ and a peak of (Fe) oxide which were separated from each other were obtained.

Therefore, the peak of the sample (4) shown in FIG. 10 was subjected to peak separation of narrow spectrum as shown in FIG. 14.

The peak of the sample (4) shown in FIG. 10 could be separated into a peak of a Si oxide, a peak of a Fe oxide, a peak of phosphoric acid or hydroxide, and a peak estimated to be due to adsorbed water, as shown in FIG. 14. Thus, in an area of the O1s peak excluding the peak of adsorbed water, it is possible to calculate a ratio between an area ratio (area%) (= at%) of the peak of O (bonding with Fe) in the Fe oxide and an area ratio (area%) (= at%) of the peak of O (bonding with Si) in the Si oxide.

As an example, in the case of Example 2 (sample (4)), an area ratio of each peak which was obtained by peak separation as shown in FIG. 14 was Fe-O: 24.53%, P-O or - OH: 9.92%, Si-O: 60.53%, and adsorbed water: 5.02%, and the total thereof was 100%. From this relationship, the area ratio of the adsorbed water was removed and the area% was recalculated.

When recalculated, the area ratio of Fe-O was 25.83%, the area ratio of P-O or - OH was 10.44%, the area ratio of Si-O was 63.73%, and the total thereof was 100%.

From these values, since O1s was 53.21 at%, O(-Si) was $53.21 \times 63.73/100$ = 33.91 at%, O (-P) or -OH was $53.21 \times 10.44/100$ = 5.56 at%, and O(-Fe) was $53.21 \times 25.83/100$ = 13.74 at%.

Accordingly, a ratio (O(-Fe)/O(-Si)) = 13.74/33.91, and the ratio was 0.41 (rounded to two decimal places), and this value was listed in Table 1 below. Similarly, in other samples, the ratio of O(-Fe)/O(-Si) was calculated and listed in Table 1.

Based on the analysis results for the samples of Examples 2, 5, and 6 and Comparative Examples 1 and 3 shown in FIGS. 9 to 13, Table 1 summarizes and shows the ratios of contained elements (C1s, O1s, Si2p, P2p, and Fe2p: at% (100 at% in total)), values (O(-Si), O(-P), -OH, and O(-Fe)) obtained from the peak separation results, and the calculated values of (O(-Fe)/O(-Si)).

Table 1

| Sample No. | | (at%) | | | | | | | | | |
|---|---|---|---|---|---|---|---|---|---|---|---|
| | | C1s | O1s | O(-Si) | O(-P), -OH | O(-Fe) | Si2p | P2p | Fe2p | Total | O(-Fe)/O(-Si) |
| 1 | Dried at 200°C in air (Example 5) | 22.47 | 50.31 | 43.44 | 4.84 | 2.03 | 24.11 | 1.55 | 1.56 | 100 | 0.05 |
| 2 | Dried at 250°C in air (Example 6) | 19.88 | 52.57 | 34.85 | 3.80 | 13.92 | 20.74 | 0.42 | 6.38 | 100 | 0.40 |
| 3 | Dried at 300°C in air (Comparative Example 1) | 15.33 | 56.5 | 25.66 | 1.07 | 29.77 | 14.49 | 0.41 | 13.27 | 100 | 1.16 |
| 4 | Dried at 250°C in nitrogen gas flow atmosphere (low oxygen partial pressure) (Example 2) | 19.3 | 53.21 | 33.91 | 5.56 | 13.74 | 20.69 | 0.62 | 6.18 | 100 | 0.41 |
| 5 | Dried at 250°C in nitrogen atmosphere (purging after evacuation) (Comparative Example 3) | 22.96 | 50.01 | 42.22 | 7.02 | 0.77 | 23.36 | 2.21 | 1.45 | 100 | 0.02 |

As shown in Table 1, the values of (O(-Fe)/O(-Si)) in Examples 2, 5, and 6 were in the range of 0.05 to 1.0 (at% ratio). On the other hand, the values of (O(-Fe)/O(-Si)) in Comparative Examples 1 and 3 were out of the range of 0.05 to 1.0 (at% ratio).

Next, the silicone resin powder in an amount of 0.09% by mass and the wax-based lubricant in an amount of 0.6% by mass relative to 100% by mass of the amount of the sample were added to each of the samples of Examples 1 to 6 and the samples of Comparative Examples 1 and 3 to obtain the plurality of raw material mixed powders.

The silicone resin powder in an amount of 0.03% by mass relative to the amount of the sample and the wax-based lubricant in an amount of 0.6% by mass relative to the amount of the iron powder were added to the sample of Comparative Example 2 to obtain a raw material mixed powder.

Each of the raw material mixed powders of Examples 1 to 6 and the raw material mixed powders of Comparative Examples 1 to 3 was used, and warm molding was performed at 80°C at a forming pressure of 790 MPa (8 t/cm$^2$) to obtain a ring-shaped compact.

The ring-shaped compact was heated to 650°C in a nitrogen atmosphere and sintered for 30 minutes. After the sintering, cooling was gradually performed to obtain a powder magnetic core. A size of the ring-shaped powder magnetic core was OD 35 × ID 25 × H 5 mm (OD: outer diameter, ID: inner diameter, H: height).

With regard to the coating liquid with which the surface of the pure iron powder was coated, some components disappeared due to the sintering at 650°C, but Si in the coating liquid mainly remained, and the coating liquid became oxides of each of Si and Fe or a composite oxide including Si, Fe, and oxygen, and these oxides remained as a grain boundary layer at the grain boundary between adjacent iron phosphate-coated iron powder particles.

With regard to the powder magnetic cores of Examples 1 to 6 and Comparative Examples 1 to 3, a measured value of each of the magnetic flux density (T) at 10 kA/m, resistivity ($\mu\Omega$m), and iron loss (W/kg) at 0.1 T and a frequency of 10 kHz, and a value of (O(-Fe)/O(-Si)) calculated by the XPS analysis method described above were listed in Table 2 below. The value of the resistivity "a×10$^b$" was described as "aE+b".

The value of (O(-Fe)/O(-Si)) shown in Table 2 is an average value of the measured values at 10 analysis fields in each sample.

The measurement of the magnetic flux density at 10 kA/m was performed with a B-H tracer (DC magnetic characteristic measuring device SK110 manufactured by Metron Giken Co., Ltd.) using a ring-shaped sample.

The measurement of the iron loss at 0.1 T and the frequency of 10 kHz was performed with a B-H analyzer (AC magnetic characteristic measuring device SY-8218, manufactured by Iwatsu Electric Co., Ltd.) using a ring-shaped sample.

Table 2

| | Magnetic flux density at 10kA/m (T) | Resistivity ($\mu\Omega$m) | Iron loss (W/kg) | O(-Fe)/O(-Si) |
|---|---|---|---|---|
| Example 1 | 1.3 | 2.63E+06 | 20.1 | 0.57 |
| Example 2 | 1.2 | 6.25E+07 | 19.5 | 0.41 |
| Example 3 | 1.2 | 1.45E+07 | 20.2 | 0.89 |
| Example 4 | 1.1 | 5.30E+09 | 19.2 | 0.22 |
| Example 5 | 1.2 | 4.55E+05 | 20.5 | 0.05 |
| Example 6 | 1.2 | 3.33E+07 | 19.6 | 0.40 |
| Comparative Example 1 | 1.1 | 7.75E+04 | 22.1 | 1.16 |
| Comparative Example 2 | 1.2 | 3.40E+04 | 21.6 | 0.03 |
| Comparative Example 3 | 1.1 | 3.58E+04 | 21.8 | 0.02 |

As shown in Table 2, the samples of Examples 1 to 6 clearly had higher resistivity ($\mu\Omega$m) and lower iron loss (W/kg) than those of the samples of Comparative Examples 1 to 3.

In addition, with regard to the samples of Examples 1 to 6, the values of (O(-Fe)/O(-Si)) calculated based on the data obtained by the XPS analysis method were in a range of 0.05 to 0.89, which fell within a range of O(-Fe)/O(-Si) = 0.05 to 1.0.

From the results shown in Tables 1 and 2, it was found that, in the case where the silica-based insulator-coated soft magnetic powder has the following characteristics, it is possible to provide a silica-based insulator-coated soft magnetic powder with which a powder magnetic core having high magnetic flux density, high resistivity, and low iron loss can be produced.

The silica-based insulator-coated soft magnetic powder is a Fe-based soft magnetic powder of which a surface is coated with a silica-based insulating film, the silica-based insulating film mainly includes a Fe oxide and a Si oxide, and the Fe oxide and the Si oxide satisfy that O(-Fe)/O(-Si) (a ratio of an amount of O in the Fe oxide to an amount of O in the Si oxide in the silica-based insulating film) is 0.05 to 1.0 (at% ratio).

FIG. 6 is a photograph showing a result (SEM secondary electron image) obtained by observing the silica-based insulator-coated soft magnetic powder of Example 4 by a field emission type scanning electron microscope at a low acceleration voltage. As described above, the sample of Example 4 was prepared by applying a sol-gel coating liquid to the iron phosphate-coated iron powder and drying the powder at 250°C in the air. The magnification ratio was set to 1500 such that one silica-based insulator-coated soft magnetic powder (particle) filled one sheet of an SEM image.

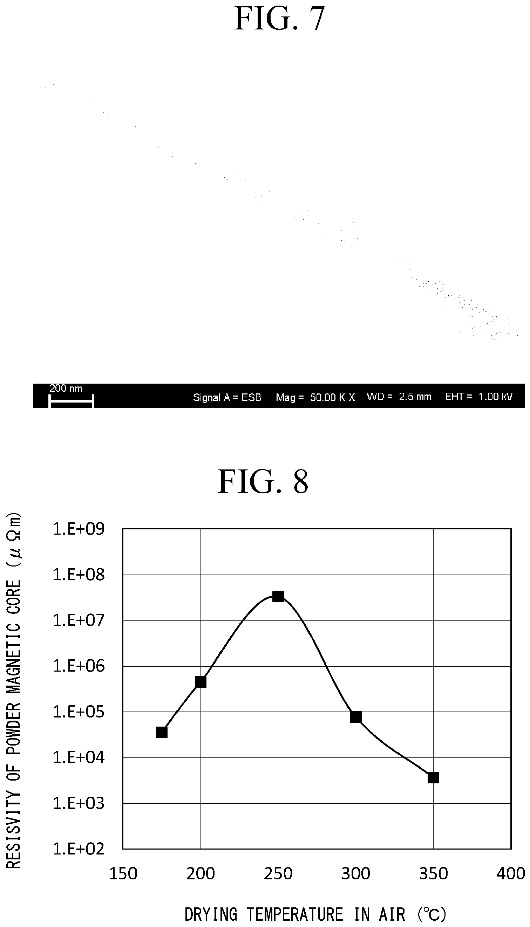

FIG. 7 is a photograph showing a result (SEM backscattered electron image) obtained by observing a partial sectional structure of a soft magnetic particle including the grain boundary layer in the powder magnetic core of Example 4, by a field emission type scanning electron microscope at a low acceleration voltage.

From these photographs, it can be seen that a silica-based insulator-coated soft magnetic powder having a structure in which the soft magnetic powder was completely covered with a silica-based insulating film is obtained. That is, it was found that the surface of each soft magnetic powder particle was completely coated with the silica-based insulating film. In addition, it was also found that in the case where a powder magnetic core was produced using the silica-based insulator-coated soft magnetic powder, a structure in which the soft magnetic powder particles were bonded to each other by a grain boundary layer was obtained.

FIG. 8 is a graph showing a relationship between resistivity ($\mu\Omega$m) of a powder magnetic core and a drying temperature in the air with regard to the powder magnetic cores produced using the silica-based insulator-coated soft magnetic powders obtained by being dried at various temperatures in the air. FIG. 8 shows the results obtained by using the samples obtained by applying the coating liquid to the iron phosphate-coated iron powder and then drying in the air. Specifically, these were the results of the silica-based insulator-coated soft magnetic powders (samples) of Comparative Example 1 obtained by performing drying at 300°C, Example 6 obtained by performing drying at 250°C, and Example 5 obtained by performing drying at 200°C. FIG. 8 is a graph showing a relationship between resistivity ($\mu\Omega$m) of the powder magnetic core produced by using each of these samples and a drying temperature in the air after coating.

In addition, FIG. 8 also shows the results of samples obtained by applying the coating liquid to the iron phosphate-coated iron powder and then drying in the air at 175°C or 350°C for 1 hour. The production conditions of these sample were the same as those of Example 5 except that the drying temperature in the air was different, and these were samples of comparative examples.

Regarding the resistivity shown in FIG. 8, when considering that the resistivity is practically required to be 1.0E+05 $\mu\Omega$m or more (1.0×10$^5$ $\mu\Omega$m or more), it can be seen that the drying temperature in the air is preferably in a range of 190°C or higher and 290°C or lower. In addition, if it is assumed that the resistivity is more preferably required to be 1.0E+06 $\mu\Omega$m or more (1.0×10$^6$ $\mu\Omega$m or more), it can be presumed that the drying temperature in the air is more preferably in a range of 220°C or higher and 280°C or lower.

Industrial Applicability

In a powder magnetic core obtained by subjecting the silica-based insulator-coated soft magnetic powder according to the present embodiment to compression molding and heating the powder to a high temperature such as 600°C or higher, excellent characteristics of a high magnetic flux density, a high resistivity, and a low iron loss are obtained. Therefore, the silica-based insulator-coated soft magnetic powder of the present embodiment can be suitably applied as a raw material for producing the powder magnetic core. The powder magnetic core is used for various electromagnetic circuit components such as a motor core, an actuator core, a transformer core, a choke core, a magnetic sensor core, a noise filter core, a switching power supply core, a DC/DC converter core, and the like.

Explanation of Reference Signs

A:        powder magnetic core
B:        silica-based insulator-coated soft magnetic powder
5:        soft magnetic powder
6:        phosphate film
7:        silica-based insulating film
11:       soft magnetic powder particle
12:       grain boundary layer
12a:      base layer
12b:      SiO$_2$-rich region

13:    base film
14:    reactor (electromagnetic circuit component)
14a:    reactor core
14b:    coil portion

**Claims**

1. A silica-based insulator-coated soft magnetic powder that is a Fe-based soft magnetic powder of which a surface is coated with a silica-based insulating film,

   wherein the silica-based insulating film includes a Fe oxide and a Si oxide, and
   the Fe oxide and the Si oxide satisfy that O(-Fe)/O(-Si) (a ratio of an amount of O in the Fe oxide to an amount of O in the Si oxide in the silica-based insulating film) is 0.05 to 1.0 (at% ratio).

2. The silica-based insulator-coated soft magnetic powder according to claim 1,
   wherein the surface of the Fe-based soft magnetic powder is coated with the silica-based insulating film via a phosphate film.

3. The silica-based insulator-coated soft magnetic powder according to claim 2,
   wherein the silica-based insulating film includes phosphoric acid or hydroxide together with the Fe oxide and the Si oxide.

4. The silica-based insulator-coated soft magnetic powder according to any one of claims 1 to 3,
   wherein in the silica-based insulating film, a total amount of the Fe oxide and the Si oxide is 68 to 83 at%.

5. A method for producing a silica-based insulator-coated soft magnetic powder, the method comprising:

   a step of adding a silicone resin and a Si alkoxide to a solvent and stirring and mixing to prepare a silica sol-gel coating liquid; and
   an applying and drying step of applying the silica sol-gel coating liquid to a Fe-based soft magnetic powder and drying the silica sol-gel coating liquid,
   wherein a silica-based insulator-coated soft magnetic powder is obtained by the steps, the silica-based insulator-coated soft magnetic powder is a Fe-based soft magnetic powder of which a surface is coated with a silica-based insulating film, the silica-based insulating film includes a Fe oxide and a Si oxide, and the Fe oxide and the Si oxide satisfy that O(-Fe)/O(-Si) (a ratio of an amount of O in the Fe oxide to an amount of O in the Si oxide in the silica-based insulating film) is 0.05 to 1.0 (at% ratio).

6. The method for producing a silica-based insulator-coated soft magnetic powder according to claim 5,
   wherein in the applying and drying step, a drying temperature is set to be in a range of 190°C to 290°C, and air or a low oxygen partial pressure atmosphere is used as a drying atmosphere.

7. The method for producing a silica-based insulator-coated soft magnetic powder according to claim 5 or 6,

   wherein the silicone resin is dissolved in the solvent, and then the Si alkoxide is added thereto and stirred and mixed, and then an acid catalyst and water are added thereto and stirred and mixed to obtain the silica sol-gel coating liquid, and
   the silica sol-gel coating liquid is applied to the Fe-based soft magnetic powder and dried.

8. The method for producing a silica-based insulator-coated soft magnetic powder according to any one of claims 5 to 7,
   wherein, as the Fe-based soft magnetic powder, a Fe-based soft magnetic powder of which a surface is coated with a phosphate film is used.

9. The method for producing a silica-based insulator-coated soft magnetic powder according to claim 8,
   wherein the silica-based insulating film includes phosphoric acid or hydroxide together with the Fe oxide and the Si oxide.

# FIG. 1

# FIG. 2

200nm

# FIG. 3

# FIG. 4

<<PREPARATION OF COATING LIQUID>>

IRON POWDER — 21

SOL-GEL COATING — 22

DRYING AFTER COATING — 23

MIXING LUBRICANT — 24

COMPRESSION MOLDING — 25

HEAT TREATMENT — 26

POWDER MAGNETIC CORE — A

SILICONE RESIN — 16

IPA — 15

HEATING AND STIRRING AT 25 to 50°C

TEOS — 17

STIRRING AT RT

H₂O — 19

HCl — 18

HEATING AND STIRRING AT 35°C

COATING LIQUID — 20

# FIG. 5

(A)
SILICONE RESIN — 16

IPA
15

① →

(B)
TEOS — 17

RESIN IPA
15, 16

② →

(C)
WATER CATALYST — 18, 19

TEOS RESIN IPA
15, 16, 17

→

(D)
SOL-GEL COATING LIQUID

— 20

# FIG. 6

10 μm

Signal A = SE2    Mag = 1.50 K X    WD = 2.5 mm    EHT = 1.00 kV

# FIG. 7

```
200 nm                    Signal A = ESB    Mag = 50.00 K X   WD = 2.5 mm   EHT = 1.00 kV
```

# FIG. 8

## FIG. 9

## FIG. 10

(1) DRIED AT 200°C IN AIR

(2) DRIED AT 250°C IN AIR

(3) DRIED AT 300°C IN AIR

(4) DRIED AT 250°C IN NITROGEN
(LOW OXYGEN PARTIAL PRESSURE)

(5) DRIED AT 250°C IN NITROGEN
(EVACUATION AND THEN GAS PURGING)

## FIG. 11

Si2p

## FIG. 12

P2p

## FIG. 13

**Fe2p**

## FIG. 14

**INTERNATIONAL SEARCH REPORT**

International application No.

PCT/JP2018/036879

A. CLASSIFICATION OF SUBJECT MATTER
Int.Cl. B22F1/00(2006.01)i, B22F1/02(2006.01)i, C01B33/12(2006.01)i,
C01B33/152(2006.01)i, H01F1/20(2006.01)i

According to International Patent Classification (IPC) or to both national classification and IPC

B. FIELDS SEARCHED

Minimum documentation searched (classification system followed by classification symbols)
Int.Cl. B22F1/00, B22F1/02, C01B33/12, C01B33/152, H01F1/20

Documentation searched other than minimum documentation to the extent that such documents are included in the fields searched
Published examined utility model applications of Japan        1922–1996
Published unexamined utility model applications of Japan      1971–2018
Registered utility model specifications of Japan              1996–2018
Published registered utility model applications of Japan      1994–2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2009-41101 A (HITACHI CHEMICAL INDUSTRY CO., LTD.) 26 February 2009, paragraphs [0008], [0030]-[0078], table 2 & JP 2009-40991 A | 1-4<br>2, 3<br>5-9 |
| X<br>Y<br>A | JP 2007-194273 A (JFE STEEL CORPORATION) 02 August 2007, paragraphs [0035]-[0080], fig. 1 (Family: none) | 1-4<br>2, 3<br>5-9 |
| X<br>Y<br>A | JP 2011-233827 A (DENSO CORP.) 17 November 2011, paragraphs [0007]-[0025], fig. 1 (Family: none) | 1-4<br>2, 3<br>5-9 |
| A | JP 2013-546162 A (TSINGHUA UNIVERSITY) 26 December 2013, paragraphs [0041]-[0056], fig. 1, 2 & US 2014/0104023 A1 paragraphs [0062]-[0086], fig. 1, 2 & WO 2012/041189 A1 & DE 112011103287 T & CN 103262183 A & CN 101996723 A | 1-9 |

☐ Further documents are listed in the continuation of Box C.     ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
05 December 2018 (05.12.2018)

Date of mailing of the international search report
18 December 2018 (18.12.2018)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017194545 A
- JP 2011233827 A
- JP 2013149659 A